(19) Europäisches Patentamt
European Patent Office
Office européen des brevets

(11) EP 3 531 097 A1

(12) **EUROPEAN PATENT APPLICATION**

(43) Date of publication:
28.08.2019 Bulletin 2019/35

(51) Int Cl.:
*G01M 3/22* (2006.01)    *A46B 11/00* (2006.01)

(21) Application number: 18158585.2

(22) Date of filing: 26.02.2018

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(71) Applicant: **Innovirium ApS**
**2880 Bagsvaerd (DK)**

(72) Inventor: **Quaade, Ulrich**
**2880 Bagsværd (DK)**

(74) Representative: **Budde Schou A/S**
**Hausergade 3**
**1128 Copenhagen K (DK)**

(54) **A METHOD OF DETECTING A LEAK IN A CLOSED SYSTEM**

(57) A leak detector kit for detecting a leak in a closed system is provided. The leak detector kit comprises a dispenser with a tracer fluid for dispensing the tracer fluid into the closed system, and a detector for detecting any tracer fluid leaking from the closed system. The dispenser has a container storing tracer fluid, a second inlet constituting a container inlet, and a container outlet connectable to the first inlet. The container inlet and container outlet being fluidly communicating with each other via said container. The dispenser being adapted for cooperating with an injector having a dilution fluid for admitting said dilution fluid into said container via said container inlet for propelling said tracer fluid with said dilution fluid out of said container via said outlet and into said closed system.

Fig 1A

**(Cont. next page)**

Fig 1B

## Description

Many practical applications include a fluid, liquid or gas, pressurized or non-pressurized, confined in a closed system. Such closed systems can comprise tanks, tubes, hoses, bags and the like as well as mechanical components like pumps, valves etc.

Often it is important for the function of the application that the fluid does not escape from the closed system. Leaks i.e. channels or punctures where fluid can escape from the closed system can occur from production or assembly errors of the closed system or by wear and tear.

If a leak occurs, it is desirable in many situations to check such closed systems for leaks and identify the location of the leak.

Leak detection is a huge field with leak detection methods ranging from visual inspection to highly sophisticated chemical or physical detectors.

Here a novel design for producing a diluted ammonia gas for leak detection is disclosed. The advantages include compactness, easy handling, fast response and safe operation.

The above object and advantages together with numerous other objects and advantages, which will be evident from the description of the present invention, are according to a first aspect of the present invention obtained by:

A leak detector kit for detecting a leak in a closed system having a first inlet, and a wall defining an outer surface, said leak detector kit comprising:

a dispenser including a tracer fluid for dispensing said tracer fluid into said closed system via said first inlet, and a detector for detecting said tracer fluid,

said dispenser comprising:

a container storing said tracer fluid,
a second inlet constituting a container inlet, and
a container outlet connectable to said first inlet,
said container inlet and said container outlet being fluidly communicating with each other via said container,

said dispenser being adapted for cooperating with an injector having a dilution fluid for admitting said dilution fluid into said container via said container inlet for propelling said tracer fluid with said dilution fluid out of said container via said outlet and into said closed system,

said detector comprising a detector material for reacting with said tracer fluid when said detector material contacting said tracer fluid for indicating a presence of any of said tracer fluid having leaked through said wall when applying said detector to said outer surface.

The injector can for example be in the form of a pump, compressor, pressurized gas cylinder etc. In some instances, it is advantageous to use a pump rather than a compressor or compressed air to pressurize the closed volume since the temperature increase related to compression of the air helps desorption of the tracer (e.g. ammonia) into the dilution gas.

The tracer fluid can be stored as a solid that by desorption or decomposition releases the tracer fluid. Alternatively, the tracer fluid can be dissolved in a liquid and released by evaporation. In the following the term sorption material is used to denote any material, solid or liquid, that can release the tracer fluid.

If the sorption material is liquid, it is advantageous in some instances to immobilize the liquid in a sponge, foam or other porous structure to help retaining the liquid in the container.

According to a second aspect of the present invention the above objects and advantages are obtained by:

A method of detecting a leak in a closed system having a first inlet, and a wall defining an outer surface, said method comprising:

providing a dispenser including:

a container storing a tracer fluid,
a second inlet constituting a container inlet, and
a container outlet connectable to said first inlet,
said container inlet and said container outlet being fluidly communicating with each other via said container,

connecting said container outlet to said first inlet,

providing a dilution fluid, and admitting said dilution fluid into said container via said container inlet for propelling said tracer fluid with said dilution fluid out of said container via said outlet and into said closed system,

said method further comprising:

providing a detector including a detector material for reacting with said tracer fluid when said detector material contacting said tracer fluid for indicating said tracer fluid, and applying said detector to said outer surface for indicating a presence of any of said tracer fluid having leaked through said wall.

The invention will now be explained in more detail below by means of examples of embodiments with reference to the very schematic drawings, in which

FIG 1A shows the schematics of the diluted tracer fluid (e.g ammonia gas) dispenser.

FIG 1B shows the dispenser used with optional one-way valves.

FIG 2 shows the diluted ammonia gas dispenser in a particular configuration for use of finding leaks on tires.

FIG 3 shows the dispenser connected to a wheel valve.

FIG 4 is a schematic diagram illustrating an embodiment of a leak identification method, where a closed volume is pressurized with diluted tracer fluid (e.g. ammonia gas) introduced to the closed volume through the dispenser, where after the leaking diluted tracer gas (e.g ammonia gas) is detected with a detector (e.g. an ammonia detector cloth).

FIG 5 shows a compact leak detection system for use of identifying the location of leaks in a small systems such as tubes in tires or other small inflatable items.

FIG 6 shows a system for identifying leaks of closed volumes in a professional setting for use in workshops/garages, construction sites etc. for extensive and/or repeated use to identify the location of leaks.

The present invention will now be described more fully hereinafter with reference to the accompanying drawings, in which exemplary embodiments of the invention are shown. The invention may, however, be embodied in different forms and should not be construed as limited to the embodiments set forth herein. Rather, these embodiments are provided so that this disclosure will be thorough and complete, and will fully convey the scope of the invention to those skilled in the art. Like reference numerals refer to like elements throughout. Like elements will, thus, not be described in detail with respect to the description of each figure.

In the following the description is presented with ammonia as an example of the tracer fluid. In general, the tracer fluid can be a reactive material that upon escaping through the leak can induce a clear signal on a detector to indicate the position of the leak. Other non-limiting examples of a tracer fluid include: inorganic substances such as CO, $CO_2$, NO, $NO_2$, $H_2S$, HCl, $H_2O(g)$ or organic substances like ethylene.

In many applications it is advantageous to use a detector surface as indicator, that by exposure to the tracer fluid on the side of the detector surface facing the leak gives a visible detectable signal also on the side pointing away from the leak for easy detection. Examples of such a detector surface could be a colorimetric detector material applied to a cloth or a piece of tissue such as the ammonia cloth. Examples of colorimetric detector materials are found in the references:

J. Mater. Chem. A, 2015,3, 5642-5647
"Colorimetric gas sensors for the detection of ammonia, nitrogen dioxide and carbon monoxide: current status and research trends", Sensor + Test Conferences 2011 - Sensor Proceedings, p. 652
Journal of the Air Pollution Control Association, 15:10, 481-484
Procedia Engineering, Volume 168, 2016, Pages 1237-1240
Sensors and Actuators B: Chemical, Volume 253, December 2017, Pages 846-851 RSC Adv., 2017, 7, 26849
"Colorimetric gas sensors", Fraunhofer Institute for Physical measurement Techniques.

The dispenser consists of a volume with an inlet and an outlet. Means for retaining the ammonia releasing material is applied, for example in the form of binding the material in a solid block or placing a filter before the outlet and optionally at the inlet. In some instances, the dispenser is formed in a way easy to screw onto a valve.

Yet another aspect of the invention relates to a method of using the diluted ammonia gas dispenser for identifying leaks of a closed volume. The diluted ammonia gas dispenser is connected to the closed volume, optionally through a one-way valve. Pressurized air/gas from a compressor, pump or similar is supplied to the inlet of the diluted ammonia gas dispenser. The diluted ammonia gas is then pressurized into the closed volume to some overpressure. If any leak is present, the diluted ammonia gas will leak out. By searching the surface of the closed volume with an ammonia detector cloth or similar, any leaks can be identified.

Previous art describes inserting an open bottle or container with an aqueous solution of ammonia in the closed system and pressurize the system with air to some pressure above ambient. Ammonia will then desorb into the pressurized air and form a diluted tracer gas in the closed volume, that can be detected in the outside if a leak is present. In many applications, it is not practical to insert a bottle or open container of ammonia solution inside the closed volume. Also, ammonia solution is highly corrosive which makes aqueous ammonia solution less attractive. In these cases, it is especially advantageous to directly supply a diluted ammonia gas and use it to pressurize the volume to be checked for leaks. Use of pressurized gas premixed with traces of ammonia has the drawbacks of the need for a bulky pressure vessel with related pressure directive regulations and low capacity of gas compared to a solid.

Many chemical substances can release ammonia by desorption or decomposition. Depending on the substance, the ammonia equilibrium pressure can vary. In general, the equilibrium pressure depends on the temperature. Depending on the reaction enthalpy, the ammonia pressure can range from almost zero to above ambient pressure at room temperature. The solid material can be any material that can release ammonia like ammonium carbonate, ammonia bicarbonate, ammonium carbamate or absorbed ammonia in ammonia absorbing salts like calcium chloride, aluminum sulfate etc. or ammonia adsorbed in zeolites or other high surface-area materials.

By passing a gas or air flow across such a material, ammonia will desorb into the gas or air to a partial pressure limited by the equilibrium pressure and desorption kinetics of the ammonia releasing material.

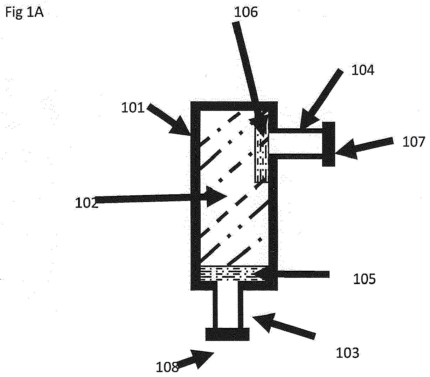

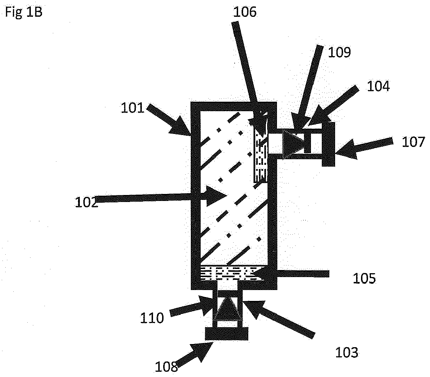

Fig 1 shows the schematics of the diluted tracer gas (e.g. ammonia gas) dispenser. The container (101) has a gas/air inlet (103) and gas outlet (104). The container (101) contains the ammonia releasing material (102) and means for retaining the ammonia releasing material for example in the form of the outlet filter (106) and optionally the inlet filter (105). In use, the outlet (104) is connected through a gas tight connection to the closed volume for leak inspection. The inlet is connected to a source of pressurized gas or air in the form of for example a pump or compressor or a reservoir of compressed gas or air such as compressed gas cylinder or a balloon. Optional seals (107) and (108) prevent loss of ammonia when the dispenser is not in use.

It is of particular importance to choose the right ammonia desorbing material. Many chemical substances can decompose and release ammonia. Depending on the substance, the ammonia equilibrium pressure can vary. In general, the equilibrium pressure depends on temperature according to the Van't Hoff equation:

$$\ln K_{eq} \quad = \quad -\frac{dH}{RT} + \frac{dS}{R}$$

where $K_{eq}$ is the equilibrium constant of the ammonia release reaction, dH is the reacton enthalpy, dS the entropy change, R the gas constant and T is the temperature in Kelvin. Depending on the reaction enthalpy, the ammonia pressure can range from close to zero to above ambient pressure at room temperature. The solid material can be any material that can release ammonia like ammonium carbonate, ammonium bicarbonate, ammonium carbamate or absorbed ammonia in ammonia absorbing salts like calcium chloride, aluminum sulphate etc. or ammonia adsorbed in e.g. zeolites or other high surface materials.

The material can be mixed with an inert solid like e.g. sand or aluminum oxide in order to prevent agglomeration and clogging and help to have a uniform gas flow through the material to give efficient ammonia desorption. It is advantageous to have the material in a high surface area form like a powder or granulate in order to have fast desorption kinetics.

For maximum sensitivity in leak detection efficiency a high partial pressure of ammonia is desirable. However, in order not to loosing ammonia when the apparatus is not in use and to avoid excessive smell of ammonia or even irritating or harmful ammonia levels, the ammonia amount should be limited. It can be limited, either by absolute amount, by the release kinetics, or by euilibrium pressure of the ammonia desorbing material. In one embodiment, the total amount of material in the container (101) is limited to an equivalent amount of ammonia of 5 gram, 1 gram, 0.1 gram, 10 mg or 1 mg. However, in order to detect the ammonia, the concentration, C inside the closed volume must exceed 2 ppm, 10 ppm, preferably 100 ppm or even more preferably 1000 ppm or 1%. Given the volume, V, of the closed volume and the pressure, p, in the closed volume, the minimum molar amount of ammonia n amount is given by n=V p C/(R T), where R is the gas constant and T the temperature. If for example V is 2 Liter (or $2 \times 10^{-3}$ m$^3$), p is 2 bar (or $2 \times 101300$ Pa), T is 300 Kelvin and the desired concentration, C, is 1000 ppm, the needed amount of ammonia is: n=0.00016 Mol.

If the ammonia comes from dissociation of ammonium carbonate:

$$(NH_4)_2CO_3 \rightarrow NH_3 + NH_4HCO_3$$

Accordingly, 0.00016 Mol of ammonium carbonate is needed corresponding to 0.015 gram.

In another embodiment, the ammonia pressure is limited by the equilibrium pressure. In this situation, it is assumed that ammonia desorb sufficiently fast to give a partial pressure in the gas that is within a factor of ten of the ammonia equilibrium pressure of the ammonia desorbing material. It is desirable to choose a material with partial pressure of 0.01 mbar, 0.1 mbar, 1 mbar, or 10 mbar at ambient temperature which leads to concentrations of 10 ppm, preferably 100 ppm or even more preferably 1000 ppm or 1% respectively if the gas pressure is 1 bar. If the pressure is higher, the chosen partial pressure and corresponding concentration should increase proportionally. For example, ammonium carbonate has an equilibrium pressure of 0.0069 bar at 20 °C corresponding to 0.69%.

In all embodiments, the ammonia equilibrium pressure at 50 °C should not exceed 3 bar, preferably 2 bar, even more preferably 1 bar. Ammonium carbonate has an equilibrium pressure of 1 bar at 58 °C and correspondingly below 1 bar at 50 °C.

The desorption speed can be increased by preparing the ammonia desorbing material in a highly porous form with high surface area or as a powder that gas can easily flow through. Optionally, the ammonia desorbing material can be mixed with another porous and/or powder material to facilitate gas permeability.

Mechanical designs of the diluted ammonia gas dispenser.

Depending on the application, it can be advantageous to have the diluted ammonia gas dispenser in either a one-time (or limited number of times) use version or extensive/multiple time use version.

One embodiment is associated with a diluted ammonia gas dispenser that is made small and compact for one-time (or limited number of times) use and loaded with an amount of ammonia desorbing material that desorbs essentially all the ammonia and where the amount is adjusted to the intended use as in the example above. The advantages of this embodiment are that the diluted ammonia gas dispenser is compact, can be sealed in a one-time fashion, can be made of cheap materials and is easy to carry. An example of use for this embodiment is to identify tire leaks and fixing punctures in the field. If the tire is a bicycle tire with a volume of 2 Liters and the desired ammonia concentration is 1000 ppm the diluted ammonia gas dispenser should be loaded with 0.0028 gram of ammonia carbonate as an example. In this embodiment, the seals (107) and (108) can be of one-time use type.

Another embodiment is associated with extended use or multiple use. Here the container is larger and carries material for multiple uses. For this embodiment, it is advantageous that the material is not depleted in a single use or few uses and the ammonia release is advantageously chosen to be limited by the partial pressure of the ammonia releasing material. An example of use can be inspection of tubes and fittings for leaks after installation. For such applications, it is desirable that the equipment can be used over and over again with little or no maintenance. In this embodiment means for sealing the inlet and outlet is needed to prevent ammonia from escaping the dispenser between uses. In this embodiment, the seals (107) and (108) are preferably of multiple use type like e.g. valves or plugs.

In yet another embodiment, the ammonia concentration is limited by the equilibrium pressure of the ammonia releasing material, but the dispenser is intended for only a limited number of uses. This is advantageous if the intended use is leak detection and repair over a limited time period with several leak tests.

To keep the volume pressurized during leak testing it is advantageous to install a one-way valve at the inlet (110), the outlet (109) or both the inlet and the outlet of the diluted ammonia gas dispenser. It is even more advantageous to use one-way valves that that are sealing when there is low (below 1 bar, 0.5 bar, 0.2 bar, 0.1 bar) or no pressure difference across in which case the one-way valves also act as means for sealing (107) and (108).

The diluted ammonia gas dispenser can be made of any material that is chemically inert and leak resistant to diluted ammonia gas. Non-limiting examples are metals like aluminum or stainless steel or polymers like nylon or polypropylene, natural rubber or ceramics.

Depending on the choice of material, the diluted ammonia gas dispenser can be produced using standard production methods like machining, hot or cold forming, die casting, injection molding etc.

In one embodiment, the ammonia gas dispenser is produced by die casting or injection molding, where the die also holds the structure of the filters (105) and/or (106) in which case the filters become an integrated part of the dispenser.

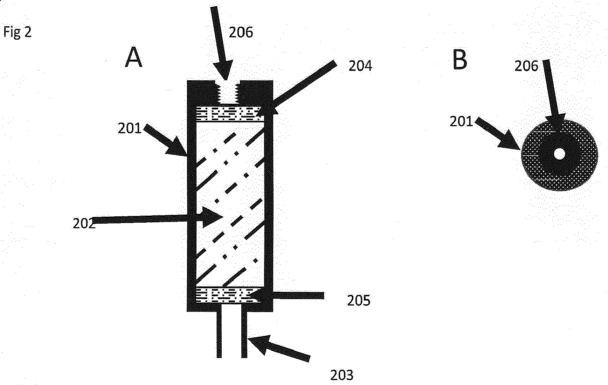

A particular embodiment is intended for leak detection of tires and tubes. Here, it is advantageous that the diluted ammonia gas dispenser is compact and easy to use. Figure 2 shows a symmetric design of the diluted ammonia gas dispenser, that can easily be attached/screwed on to the valve of the tire or tube. "A" is sideview and "B" is top view. It is advantageous for this particular embodiment to be essentially rotational symmetric to facilitate easy on- and unscrewing of the diluted ammonia dispenser to the valve of the closed volume. (201) is the symmetric housing, (202) is the ammonia desorbing material, (203) is the inlet, (204) and (205) are filters.

The thread of the outlet (206) should match the thread of the valve and the connector (203) should match the means for pressurized air as for example a bicycle pump or another standard fitting for pressurized air. Commonly used valves are Presta, Schrader or Woods valves. Optionally, the inlet (203) is formed with a thread.

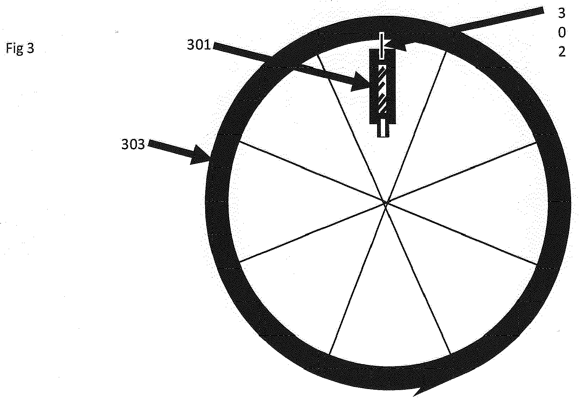

In some cases, the location of the leak can be found without removing the tube from the wheel and in the case of tubeless tires the location of the leak must be found before removing the tire. Figure 3 shows the diluted ammonia gas dispenser (301) attached to the valve (302) of a wheel (303).

Desorption of ammonia from the ammonia desorbing material is enhanced at elevated temperature. In some embodiments the diluted ammonia gas dispenser comprises means for heating. This can be external heating in form of a heater element or internal heating, where a flow restriction is incorporated in the dispenser to provide friction between the gas and the dispenser and/or provide an approximate adiabatic compression during pumping that also results in increasing temperature.

Another embodiment concerns a compact system for occasional leak detection in e.g. the field, or other circumstances where easy use is desired.

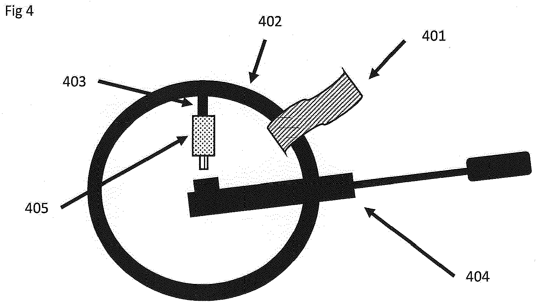

Figure 4 shows a system for leak detection of for example a bicycle tube. It comprises as example a tube (402) with a leak, a valve (403), a diluted ammonia dispenser (405), a piece of ammonia detector cloth (401) and a pump (404) to inflate the tube through the diluted ammonia gas dispenser. To identify the position of the leak the diluted ammonia gas dispenser is screwed onto the valve. The tube is the inflated through the diluted ammonia gas dispenser to fill the tube to slight overpressure with air containing traces of ammonia. The air with diluted ammonia will escape through the leak. By searching the surface of the tube with the ammonia detector cloth, the position of the leak is revealed by green coloration of the ammonia detection cloth. This embodiment is particularly useful for identifying leaks on the road if a vehicle like e.g a bicycle experiences a puncture during a ride.

Yet another embodiment concerns a system for extensive or professional use.

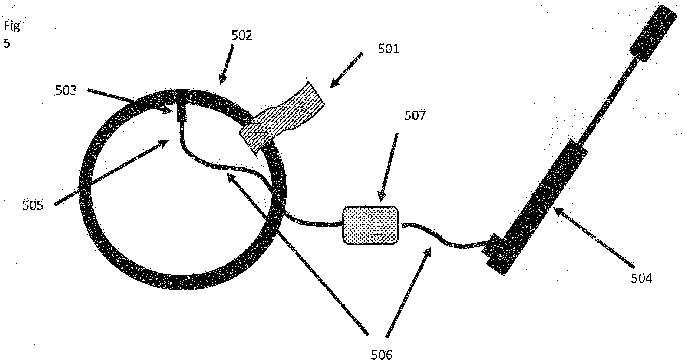

Figure 5 shows a system intended for repeated use as in e.g. a workshop, garage of construction site. It comprises a closed volume e.g. an automobile tube or similar (502) with a valve (503), hoses (506) attached between the valve and diluted ammonia gas dispenser (507) and between the diluted ammonia gas dispenser (503) and the pump (504). Alternative to the pump a compressor or compressed air or gas could be used. To identify the position of the leak the diluted ammonia gas dispenser is attached to the valve through the hose. The tube is then inflated through the diluted ammonia gas dispenser to fill the tube to slight overpressure with air containing traces of ammonia. The air with diluted ammonia will escape through the leak. By searching the surface of the tube with the ammonia cloth, the position of the leak is revealed by green coloration of the ammonia detection cloth.

With sufficient size of the diluted ammonia gas dispenser, there is capacity for many repeated uses before the dispenser is depleted.

In this system the diluted ammonia gas dispenser is larger and for multiple use. This system is particularly useful for use in a garage, workshop or repair shop, where several puncture repairs are anticipated, or at construction sites, where tubes or hoses are installed and need to be checked for leaks.

The embodiments can be used for leak detection of any closed volume. They are particularly useful for leak detection of smaller items like inflated tubes, hoses, balls, toys, air mattresses and the like. The embodiments can also be used for identification of leaks of pressure vessels, tube or hose systems in metal, rubber, plastic or other synthetic materials.

A method for leak detection comprising the following steps:

1. Providing a diluted tracer gas (e.g. ammonia) dispenser described above.
2. Attaching the dispenser to the suspected leaking volume, V.
3. Inflating or pressurizing the volume, V through the dispenser.
4. Providing means for detecting diluted tracer gas (e.g. ammonia) leaking from the volume, V.
5. Searching the surface of the volume, V with said means for detecting leaking diluted ammonia gas to identify the leak.

The means for detecting leaking diluted ammonia gas can be electronic ammonia detectors, litmus paper, ammonia detector cloth or the like. Ammonia detector cloth as described in patent application US4822743A or "ammonia leak detection cloth" as supplied from Precision Laboratories is especially advantageous as it is flexible, has distinct color change and the color change is easily visible on both sides of the cloth.

Also spraying the surface with a liquid solution of ammonia detection material will reveal the position of the leak by reacting with the escaping ammonia.

Even searching the surface by spraying with $CO_2$ will reveal the leak since ammonia and $CO_2$ gas react to form a mist that is easily detected.

EXAMPLES

Example 1a: Diluted ammonia dispenser

In this example, the diluted ammonia dispenser is made from Nylon 6.6 in a geometry similar to Figure 2. The dimensions are: overall length 50 mm, outer diameter 8 mm, inner diameter 4 mm. The thread to attach to a valve is unc 12-24 iso. The starting point is a 50 mm, ø8 mm Nylon rod. From one end a hole, ø3.5 mm is drilled to a depth of 1.6 mm and the unc 12-24 iso thread is cut. From the other end a hole ø4 mm is drilled to a depth such that the holes from each end are separated by 1 mm Nylon. The top 4 mm is increased in diameter to ø5 mm to form a recess with a 5 mm drill. The two holes are then connected by drilling a small hole ø1.5 mm through the remaining 1 mm Nylon to leave a constriction between the two holes. A piece of rockwool 6 mm x 6 mm is inserted on the hole without thread and pushed to and compacted against the constriction. This is the outlet filter. The hole without thread is then filled with ammonium carbonate up to 5 mm from the edge. Another piece of rockwool (6 mm x 6 mm) is inserted and compressed against the top of the ammonium carbonate. This is the inlet filter. Finally, a Nylon tube OD 5mm, ID 1.5 mm, length 8 mm is inserted with a press fit to the bottom of the 5 mm recess. This both holds the inlet filter and extends to form the stud, where a pump can be applied.

The ammonia dispenser was filled with 263 mg ammonium carbonate. Several tests showed that after inflating a bicycle tube 700 x 25-35c to a diameter of 2.5 cm, 6-9 mg ammonium carbonate was released from the diluted ammonia dispenser each time.

When not in use, the inlet and outlet is sealed with aluminum tape to prevent loss of ammonia.

Example 1b:

Other prototypes have been prepared with filters consisting of compacted glass wool. Both work well. Samples with filters made from felt pads similar to pads mounted under furniture to protect the floor from scratches work even better as they provide more flow resistance and larger pressure increase and hence temperature rise during pumping. The temperature increase causes a higher ammonia concentration that makes the leak more easily detectable.

In another instance, the ammonia dispenser was filled with 140 mg $CaCl_2:8NH_3$. By inflating a bicycle tube 700 x 25-35c to a diameter of 2.5 cm, 9-13 mg ammonia was released from the dispenser as was shown in several tests.

Prototypes in aluminum, iron and steel have been prepared with similar dimensions and work equally well.

One sample with inner diameter 2 cm and length 7 cm also works well and can be used many more times before depletion.

Example 2: System for "in-field" leak detection on a bicycle tube.

The system comprises a small diluted ammonia gas dispenser, an ammonia detector and a pump/compressor, and is used together with a leaking part.

In this particular example, the leaking part is a bicycle rubber tube. The ammonia detector is a piece of ammonia cloth 5 cm by 10 cm from Precision Laboratories. The diluted ammonia gas dispenser is made from Nylon 6.6 and filled with -250 mg ammonium carbonate as in Example 1a. The pump is a standard bicycle pump.

Example 3: System for identifying leaks for use in a professional setting like a garage or construction site.

The system comprises a diluted ammonia gas dispenser intended for extended multiple use, an ammonia detector and a pump/compressor, and is used together with a leaking part.

In this example, the diluted ammonia gas dispenser has a volume of 400 mL and is made of stainless steel SAE 304. It consists of a straight tube OD=60 mm, wall thickness 2 mm with welded Kloebber form end-caps. Each end-cap has a centered opening with a 3/8-inch thread for attaching fittings. In this example, a filter disk of glass wool matching the inner diameter is placed in one of the endcaps before welding the straight tube and the endcaps together. A ball valve with hose fitting is screwed onto the endcap containing the filter disk. This end will be the outlet. The other endcap (the inlet) is welded to the other end of the straight tube. The diluted ammonia gas dispenser is filled 90% with ammonium carbonate through the opening in the inlet endcap and flexible filter material (glass wool) is presses to fill the last 10%. Finally, a ball valve with hose barb is screwed onto the inlet. For operation, the inlet is connected with a hose to a pressurized air supply or a pump and the outlet is connected to the part to be leak tested through another hose.

When the part to be leak tested is inflated, both ball valves are opened. When the desired overpressure is reached one or both ball valves are closed.

When the diluted ammonia gas dispenser is not used, both ball valves are closed to prevent loss of ammonia.

The ammonia detector is a piece of ammonia cloth 10 cm by 20 cm from Precision Laboratories.

The system is used with a leaking part. E.g. a leaking hose or tube, air mattress or other inflatable items, tube systems of metals, plastics or composites or any combination thereof.

Example 4: Method of detecting leaks in a rubber tube.

A leaking bicycle tube is provided. A diluted ammonia gas dispenser similar to example 1a is provided and is screwed onto the valve of the bicycle tube. The leaking bicycle tube is inflated using an standard bicycle pump through the diluted ammonia gas dispenser to slight overpressure. An ammonia detector cloth 5 cm by 10 cm from Precision Laboratories is provided. The surface of the tube is searched with the ammonia detector cloth until change of color from yellow to green indicates the position of the leak. A few pump strokes can be applied through the diluted ammonia dispenser when necessary during searching to maintain the overpressure until the leak is localized.

## Claims

1. A dispenser for detecting a leak in a closed system having a first inlet, and a wall defining an outer surface, said dispenser comprising:

   a container storing a tracer fluid,
   a second inlet constituting a container inlet, and
   a container outlet connectable to said first inlet for dispensing said tracer fluid into said closed system via said first inlet,
   said container inlet and said container outlet being fluidly communicating with each other via said container,
   said dispenser being adapted for cooperating with an injector having a dilution fluid for admitting said dilution fluid into said container via said container inlet for propelling said tracer fluid with said dilution fluid out of said container via said container outlet and into said closed system via said first inlet,
   said tracer fluid being detectable by a detector for indicating a presence of any of said tracer fluid having leaked through said wall.

2. A leak detector kit for detecting a leak in a closed system having a first inlet, and a wall defining an outer surface, said leak detector kit comprising:

   a dispenser including a tracer fluid for dispensing said tracer fluid into said closed system via said first inlet, and
   a detector for detecting said tracer fluid,
   said dispenser comprising:

   a container storing said tracer fluid,
   a second inlet constituting a container inlet, and
   a container outlet connectable to said first inlet,
   said container inlet and said container outlet being fluidly communicating with each other via said container,
   said dispenser being adapted for cooperating with an injector having a dilution fluid for admitting said dilution fluid into said container via said container inlet for propelling said tracer fluid with said dilution fluid out of said container via said container outlet and into said closed system via said first inlet,
   said detector comprising a detector material for reacting with said tracer fluid when said detector material contacting said tracer fluid for indicating a presence of any of said tracer fluid having leaked through said wall when applying said detector to said outer surface.

3. The leak detector kit according to any of the preceding claims, said tracer fluid being incorporated in a sorption material for desorption of said tracer fluid.

4. The leak detector kit according to claim 3, said sorption material having an equilibrium pressure of said tracer fluid between 0.01 mbar and 1000 mbar at 20 °C.

5. The leak detector kit according to any of the preceding claims, said tracer fluid being ammonia gas.

6. The leak detector kit according to any of the preceding claims, said dilution fluid being air.

7. The leak detector kit according to any of the preceding claims, said detector being a litmus paper or an ammonia cloth.

8. The leak detector kit according to any of the preceding claims, said dispenser having an inlet plug for closing said container inlet, and an outlet plug for closing said container outlet.

9. The leak detector kit according to any of the preceding claims, said container inlet having an inlet filter for containing said sorption material.

10. The leak detector kit according to any of the preceding claims, said container outlet having an outlet filter for containing said sorption material

11. The leak detector kit according to any of the preceding claims, said container inlet having an inlet valve constituting a first one-way valve.

12. The leak detector kit according to claim 11, said container outlet having an outlet valve constituting a second one-way valve.

13. The leak detector kit according to any of the preceding claims, said injector including an injector outlet connectable to said container inlet for admitting said dilution fluid into said container.

14. The leak detector kit according to any of the preceding claims, said injector being a pump or a powerlet cartridge such as a C02 charger.

15. A method of detecting a leak in a closed system having a first inlet, and a wall defining an outer surface, said method comprising:

   providing a dispenser including:

   a container storing a tracer fluid,
   a second inlet constituting a container inlet, and
   a container outlet connectable to said first inlet,
   said container inlet and said container outlet being fluidly communicating with each other via said container,
   connecting said container outlet to said first inlet,

   providing a dilution fluid, and admitting said dilution fluid into said container via said container inlet for propelling said tracer fluid with said dilution fluid out of said container via said outlet and into said closed system,
   said method further comprising:

   providing a detector including a detector material for reacting with said tracer fluid when said detector material contacting said tracer fluid for indicating said tracer fluid, and applying said detector to said outer surface for indicating a presence of any of said tracer fluid having leaked through said wall.

Fig 1A

Fig 1B

Fig 2

A

B

206

204

201

202

205

203

206

201

Fig 3

301

303

3
0
2

Fig 4

Fig
5

502

501

503

507

505

504

506

Europäisches
Patentamt

European
Patent Office

Office européen
des brevets

## EUROPEAN SEARCH REPORT

Application Number

EP 18 15 8585

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/247399 A1 (SCHWARTZ VLADIMIR [US] ET AL) 13 October 2011 (2011-10-13) * abstract * * paragraph [0011] * * figure 1 * ----- | 1-15 | INV. G01M3/22 A46B11/00 |
| A | WO 92/14109 A1 (ROCKY RESEARCH [US]) 20 August 1992 (1992-08-20) * abstract * * page 7, lines 11 - 14 * * figure 1 * ----- | 3-5,7,8, 11-13 | |
| A | EP 1 544 613 A1 (SGT SINGAPORE HOLDINGS PTE LTD [SG]) 22 June 2005 (2005-06-22) * column 0020 * ----- | 9,10 | |
| | | | TECHNICAL FIELDS SEARCHED (IPC) |
| | | | G01M A46B |

The present search report has been drawn up for all claims

| Place of search | Date of completion of the search | Examiner |
|---|---|---|
| The Hague | 19 November 2018 | Kister, Clemens |

Europäisches
Patentamt

European
Patent Office

Office européen
des brevets

Application Number

EP 18 15 8585

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 18 15 8585

The Search Division considers that the present European patent application does not comply with the requirements of unity of invention and relates to several inventions or groups of inventions, namely:

    1. claims: 1, 2, 15

        Invention 1 solves the problem to provide for a leak detection kit,
             ---

    2. claims: 3-14

        Invention 2 solves the problem of providing for a dispenser with improved fluid storage capability.
             ---

## ANNEX TO THE EUROPEAN SEARCH REPORT
## ON EUROPEAN PATENT APPLICATION NO.

EP 18 15 8585

This annex lists the patent family members relating to the patent documents cited in the above-mentioned European search report.
The members are as contained in the European Patent Office EDP file on
The European Patent Office is in no way liable for these particulars which are merely given for the purpose of information.

19-11-2018

| Patent document cited in search report | | | Publication date | Patent family member(s) | | | Publication date |
|---|---|---|---|---|---|---|---|
| US 2011247399 | A1 | | 13-10-2011 | CN<br>EP<br>JP<br>JP<br>US<br>WO | 102869969<br>2556355<br>5750155<br>2013524226<br>2011247399<br>2011124611 | A<br>A2<br>B2<br>A<br>A1<br>A2 | 09-01-2013<br>13-02-2013<br>15-07-2015<br>17-06-2013<br>13-10-2011<br>13-10-2011 |
| WO 9214109 | A1 | | 20-08-1992 | AT<br>AU<br>CA<br>DE<br>DE<br>EP<br>ES<br>HK<br>JP<br>NZ<br>US<br>US<br>WO | 141403<br>650739<br>2101551<br>69212830<br>69212830<br>0592449<br>2090617<br>5797<br>H06508425<br>241572<br>5165247<br>5289690<br>9214109 | T<br>B2<br>A1<br>D1<br>T2<br>A1<br>T3<br>A<br>A<br>A<br>A<br>A<br>A1 | 15-08-1996<br>30-06-1994<br>12-08-1992<br>19-09-1996<br>23-01-1997<br>20-04-1994<br>16-10-1996<br>17-01-1997<br>22-09-1994<br>26-08-1994<br>24-11-1992<br>01-03-1994<br>20-08-1992 |
| EP 1544613 | A1 | | 22-06-2005 | CN<br>EP<br>HK<br>NL<br>SG<br>US | 1629527<br>1544613<br>1079272<br>1025042<br>112982<br>2005155653 | A<br>A1<br>A1<br>C2<br>A1<br>A1 | 22-06-2005<br>22-06-2005<br>06-03-2009<br>20-06-2005<br>28-07-2005<br>21-07-2005 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4822743 A

**Non-patent literature cited in the description**

- *J. Mater. Chem. A,* 2015, vol. 3, 5642-5647
- Colorimetric gas sensors for the detection of ammonia, nitrogen dioxide and carbon monoxide: current status and research trends. *Sensor + Test Conferences 2011 - Sensor Proceedings,* 2011, 652
- *Journal of the Air Pollution Control Association,* vol. 15 (10), 481-484
- *Procedia Engineering,* 2016, vol. 168, 1237-1240
- *Sensors and Actuators B: Chemical,* December 2017, vol. 253, 846-851
- *RSC Adv.,* 2017, vol. 7, 26849
- Colorimetric gas sensors. *Fraunhofer Institute for Physical measurement Techniques*